# EUROPEAN PATENT APPLICATION

(11) **EP 3 901 221 A1**
(43) Date of publication of application: **27.10.2021**
(21) Application number: 19899161.4
(22) Date of filing: 03.12.2019
(51) Int. Cl.: C09D 5/02, C09D 175/04, C08G 18/00, C08G 18/08, C08G 18/12, C08G 18/32

(54) **AQUEOUS URETHANE RESIN DISPERSION, FILM, MULTILAYER BODY AND METHOD FOR PRODUCING AQUEOUS URETHANE RESIN DISPERSION**

(30) Priority: 21.12.2018 JP 2018239599
(71) Applicant: DIC Corporation, Tokyo 174-8520 (JP)
(72) Inventor: TETSUI, Tomohiro, Takaishi-shi, Osaka 592-0001 (JP); SAKAMOTO, Tamotsu, Takaishi-shi, Osaka 592-0001 (JP); KANAGAWA, Yoshinori, Takaishi-shi, Osaka 592-0001 (JP); KATAKAMI, Yasuyuki, Takaishi-shi, Osaka 592-0001 (JP); TANAKA, Hiroki, Takaishi-shi, Osaka 592-0001 (JP); CHIJIWA, Hiroyuki, Takaishi-shi, Osaka 592-0001 (JP)
(74) Representative: Gerauer, Marc Philippé
(86) International application number: PCT/JP2019/047144
(87) International publication number: WO 2020/129602

(57) **Abstract**

The present invention provides an aqueous dispersion of a urethane resin. The aqueous dispersion includes a urethane resin (X), and an essential raw material of the urethane resin (X) is a chain extender (a1). A content of the urethane resin (X) in the aqueous dispersion is within a range of 50 to 70 mass%. Furthermore, the present invention provides a method for producing an aqueous dispersion of a urethane resin. The method includes the steps of preparing a urethane prepolymer (i) having an isocyanate group, by reacting together a polyol (a2), a polyisocyanate (a3), and a compound (a4) having a hydrophilic group, in the absence of a solvent; subsequently dispersing the urethane prepolymer (i) in water; and subsequently reacting a chain extender (a1) with the urethane prepolymer (i) to yield a urethane resin (X), wherein a content of the urethane resin (X) is 50 to 70 mass%.

## Description

### Technical Field

The present invention relates to an aqueous dispersion of a urethane resin and further relates to a film, a layered body, and a method for producing an aqueous dispersion of a urethane resin.

### Background Art

Urethane resins have mechanical strength and good texture and are, therefore, widely used in the production of synthetic leathers (including artificial leathers), coating agents, adhesives, gloves, garments, and the like. Urethane resins that have been predominantly used to date are solvent-based urethane resins, with the solvent including N,N-dimethylformamide (DMF). However, against the background of, for instance, regulations on DMF in Europe, tightened regulations on VOC emission in China and Taiwan, and regulations on DMF by major apparel manufacturers, there is a growing demand for an approach that is environmentally friendly, such as use of a weak solvent, use of an aqueous system, or use of a solventless system.

Under such circumstances, aqueous dispersions of a urethane resin (polyurethane dispersions), in which a urethane resin is dispersed in water, have begun to be used for the applications mentioned above. In the related art, a method for producing an aqueous dispersion of a urethane resin includes the steps of producing a urethane prepolymer having an isocyanate group, in a solvent such as acetone or methyl ethyl ketone; subsequently adding water thereto and performing transfer emulsification; carrying out chain extension; and removing the solvent (see, for example, PTL 1). Methods of the related art such as this method include a very large number of steps. Accordingly, in many cases, these methods took three to five days for actual production and were, therefore, very cumbersome. Furthermore, these methods presented a problem of high energy consumption for removing the solvent and a problem of the waste liquid treatment.

In addition, regarding aqueous dispersions of a urethane resin produced by methods of the related art, the following issues have been pointed out as long-time challenges: compared with solvent-based urethane resins of the related art, the aqueous dispersions have poor drying ability, poor film forming ability, and low mechanical properties, such as a low tensile strength.

### Citation List

### Patent Literature

PTL 1: Japanese Unexamined Patent Application Publication No. 2018-48325

### Summary of Invention

### Technical Problem

An object of the present invention is to provide an aqueous dispersion of a urethane resin, the aqueous dispersion having excellent film forming ability.

### Solution to Problem

The present invention provides an aqueous dispersion of a urethane resin. The aqueous dispersion includes a urethane resin (X), and an essential raw material of the urethane resin (X) is a chain extender (a1). A content of the urethane resin (X) in the aqueous dispersion is within a range of 50 to 70 mass%. The present invention also provides a dried film of the aqueous dispersion and a layered body.

Furthermore, the present invention provides a method for producing an aqueous dispersion of a urethane resin. The method includes the steps of preparing a urethane prepolymer (i) having an isocyanate group, by reacting together a polyol (a2), a polyisocyanate (a3), and a compound (a4) having a hydrophilic group, in the absence of a solvent; subsequently dispersing the urethane prepolymer (i) in water; and subsequently reacting a chain extender (a1) with the urethane prepolymer (i) to yield a urethane resin (X), wherein a content of the urethane resin (X) is 50 to 70 mass%.

### Advantageous Effects of Invention

According to the present invention, aqueous dispersions of a urethane resin have excellent film forming ability. Description of Embodiments

According to the present invention, an aqueous dispersion of a urethane resin is an aqueous dispersion including a urethane resin (X), and an essential raw material of the urethane resin (X) is a chain extender (a1). A content of the urethane resin (X) in the aqueous dispersion is within a range of 50 to 70 mass%.

In the present invention, it is essential that the content of the urethane resin (X) be within the range of 50 to 70 mass%. Thus, since the so-called solids content in the aqueous dispersion is high, the aqueous dispersion of a urethane resin has enhanced drying ability, and, consequently, a urethane resin film does not exhibit cracks or the like during and/or after drying, that is, excellent film forming ability is achieved. Furthermore, since the solids content is high, a line speed associated with the evaporation of water is improved. The content of the urethane resin (X) may be within a range of 53 to 67 mass%. This is preferable from the standpoint of achieving higher film forming ability. The content is more preferably within a range of 55 to 65 mass% and even more preferably within a range of 57 to 63 mass%.

Furthermore, an essential raw material of the urethane resin (X) is the chain extender (a1). The use of the chain extender (a1) enhances the mechanical strength of the urethane film and contributes to excellent film forming ability.

The urethane resin (X) is capable of being dispersed in water. Examples of a urethane resin that may be used therefor include urethane resins having a hydrophilic group, such as an anionic group, a cationic group, or a nonionic group; and urethane resins forcibly dispersed in water by using an emulsifying agent. These urethane resins may be used alone or in a combination of two or more. Among these, using a urethane resin having a hydrophilic group is preferable from the standpoint of production stability and water dispersion stability. A urethane resin having an anionic group and/or a nonionic group is more preferable.

A method for preparing the urethane resin having an anionic group may be, for example, a method that uses, as a raw material, at least one compound selected from the group consisting of glycol compounds having a carboxyl group; and compounds having a sulfonyl group.

Examples of the glycol compounds having a carboxyl group include 2,2-dimethylolpropionic acid, 2,2-dimethylolbutanoic acid, 2,2-dimethylolbutyric acid, 2,2-dimethylolpropionic acid, and 2,2-valeric acid. These compounds may be used alone or in a combination of two or more.

Examples of the compounds having a sulfonyl group include 3,4-diaminobutanesulfonic acid, 3,6-diamino-2-toluenesulfonic acid, 2,6-diaminobenzenesulfonic acid, N-(2-aminoethyl)-2-aminosulfonic acid, N-(2-aminoethyl)-2-aminoethylsulfonic acid, N-2-aminoethane-2-aminosulfonic acid, N-(2-aminoethyl)-β-alanine, and salts of any of these. These compounds may be used alone or in a combination of two or more.

A method for preparing the urethane resin having a nonionic group may be, for example, a method that uses, as a raw material, a compound having an oxyethylene structure.

Examples of the compound having an oxyethylene structure include polyether polyols having an oxyethylene structure, such as polyethylene glycols, polyoxyethylene-polyoxypropylene glycols, polyoxyethylene-polyoxytetramethylene glycols, and polyethylene glycol dimethyl ethers. These compounds may be used alone or in a combination of two or more. Among these, using a polyethylene glycol and/or a polyethylene glycol dimethyl ether is preferable from the standpoint of more conveniently controlling a hydrophilic property.

The raw material used in the preparation of the urethane resin having a nonionic group may have a number average molecular weight within a range of 200 to 10,000. This is preferable from the standpoint of achieving higher emulsifiability and water dispersion stability. The number average molecular weight is more preferably within a range of 300 to 3,000 and even more preferably within a range of 300 to 2,000. Note that the number average molecular weight of the raw material used in the preparation of the urethane resin having a nonionic group is a value measured by gel permeation column chromatography (GPC).

A method for preparing the urethane resin having a cationic group may be, for example, a method that uses, as a raw material, one or more compounds having an amino group.

Examples of the compounds having an amino group include compounds having primary and secondary amino groups, such as triethylenetetramine and diethylenetriamine; and compounds having a tertiary amino group, examples of the compounds including N-alkyl dialkanolamines, such as N-methyl diethanolamine and N-ethyl diethanolamine, and N-alkyl diaminoalkylamines, such as N-methyl diaminoethylamine and N-ethyl diaminoethylamine. These compounds may be used alone or in a combination of two or more.

Examples of emulsifying agents that may be used in the preparation of the urethane resin forcibly dispersed in water include nonionic emulsifying agents, such as polyoxyethylene nonylphenyl ether, polyoxyethylene lauryl ether, polyoxyethylene styrylphenyl ether, polyoxyethylene sorbitol tetraoleate, and polyethylene-polypropylene copolymers; anionic emulsifying agents, such as fatty acid salts, examples thereof including sodium oleate, alkyl sulfate salts, alkyl benzene sulfonate salts, alkyl sulfosuccinate salts, naphthalene sulfonate salts, polyoxyethylene alkyl sulfate salts, sodium alkane sulfonate salts, and alkyl diphenyl ether sodium sulfonate; and cationic emulsifying agents, such as alkylamine salts, alkyltrimethylammonium salts, and alkyldimethylbenzylammonium salts. These emulsifying agents may be used alone or in a combination of two or more.

Specifically, the urethane resin (X) may be, for example, a reaction product of the chain extender (a1), a polyol (a2), a polyisocyanate (a3), and a compound (a4) having a hydrophilic group (a raw material that is used in the preparation of the urethane resin having an anionic group, the urethane resin having a cationic group, or the urethane resin having a nonionic group), with the compound (a4) having a hydrophilic group being optional.

The chain extender (a1) may be one having a molecular weight of less than 500 (preferably within a range of 50 to 450), and specific examples thereof include chain extenders having a hydroxy group, such as ethylene glycol, diethylene glycol, triethylene glycol, propylene glycol, dipropylene glycol, 1,3-propanediol, 1,3-butanediol, 1,4-butanediol, hexamethylene glycol, sucrose, methylene glycol, glycerol, sorbitol, bisphenol A, 4,4'-dihydroxydiphenyl, 4,4'-dihydroxydiphenyl ether, and trimethylolpropane; and chain extenders having an amino group, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, and hydrazine. These chain extenders may be used alone or in a combination of two or more. Note that the molecular weight of the chain extender (a1) is a value calculated from a chemical formula.

The chain extender (a1) may be a chain extender having an amino group (hereinafter abbreviated as an "amine-containing chain extender"). This is preferable from the standpoint of easily accomplishing chain extension at a relatively low temperature of less than or equal to 30°C, thereby reducing the energy consumption involved in the reaction, and achieving higher mechanical strength and film forming ability through the incorporation of the urea group. The amine-containing chain extender may be one having a molecular weight within a range of 30 to 250. This is more preferable from the standpoint of achieving higher emulsifiability and water dispersion stability even in the case in which the solids content of the urethane resin (X) is increased. Even more preferably, the molecular weight is within a range of 40 to 250. Note that in instances where two or more chain extenders are used in combination, the molecular weight is an average of the molecular weights thereof, and it is sufficient that the average be within any of the above-mentioned preferred ranges of the molecular weight.

A usage ratio of the chain extender (a1) may be within a range of 0.1 to 30 mass% of a total mass of the raw materials that form the urethane resin (X). This is preferable from the standpoint of achieving higher mechanical strength, film forming ability, emulsifiability, and water dispersion stability and more easily increasing the solids content of the urethane resin (X). Particularly preferably, the usage ratio may be within a range of 0.5 to 10 mass%.

Examples of the polyol (a2) include polyether polyols, polyester polyols, polyacrylic polyols, polycarbonate polyols, and polybutadiene polyols. These polyols may be used alone or in a combination of two or more. Note that in instances where a urethane resin having a nonionic group is used as the urethane resin (X), a polyol different from the raw material used in the preparation of the urethane resin having a nonionic group is to be used as the polyol (a2).

The polyol (a2) may have a number average molecular weight within a range of 500 to 100,000. This is preferable from the standpoint of the mechanical strength of a resulting film. More preferably, the number average molecular weight may be within a range of 800 to 10,000. Note that the number average molecular weight of the polyol (a2) is a value measured by gel permeation column chromatography (GPC).

A usage ratio of the polyol (a2) may be within a range of 40 to 90 mass% of the total mass of the raw materials that form the urethane resin (X). This is preferable from the standpoint of achieving higher mechanical strength. Particularly preferably, the usage ratio may be within a range of 50 to 80 mass%.

Examples of the polyisocyanate (a3) include aromatic polyisocyanates, such as phenylene diisocyanate, toluene diisocyanate, diphenylmethane diisocyanate, xylylene diisocyanate, naphthalene diisocyanate, polymethylene polyphenyl polyisocyanate, and carbodiimidized diphenylmethane polyisocyanate; and aliphatic polyisocyanates or alicyclic polyisocyanates, such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate. These polyisocyanates may be used alone or in a combination of two or more.

A usage ratio of the polyisocyanate (a3) may be within a range of 5 to 40 mass% of the total mass of the raw materials that form the urethane resin (X). This is preferable from the standpoint of achieving higher mechanical strength. Particularly preferably, the usage ratio may be within a range of 10 to 35 mass%.

A usage ratio of the compound (a4) having a hydrophilic group may be less than or equal to 5 mass% of the total mass of the raw materials that form the urethane resin (X). This is preferable from the standpoint of achieving higher emulsifiability, water dispersion stability, and film forming ability. The usage ratio may be more preferably less than or equal to 2 mass%, even more preferably within a range of 0.25 to 2 mass%, and particularly preferably within a range of 0.5 to 1.8 mass%.

The urethane resin (X) may have an average particle diameter within a range of 0.01 to 1 µm. This is preferable from the standpoint of achieving higher film forming ability. More preferably, the average particle diameter may be within a range of 0.05 to 0.9 µm. Note that the method for measuring the average particle diameter of the urethane resin (X) will be described later in the Examples section.

The water used in the present invention may be, for example, ion exchanged water or distilled water. These types of water may be used alone or in a combination of two or more.

The aqueous dispersion of a urethane resin of the present invention includes the urethane resin (X) and water as essential components and may include one or more other additives as necessary.

Examples of the one or more other additives include emulsifying agents, crosslinking agents, neutralizing agents, thickening agents, urethane-forming catalysts, fillers, pigments, dyes, flame retardants, leveling agents, anti-blocking agents, film-forming agents, and foaming agents. These additives may be used alone or in a combination of two or more. Note that in some instances, an organic solvent may be used as a film-forming agent; the organic solvent may be used by being added at a later time, depending on the intended use of the aqueous dispersion of a urethane resin. In particular, using an emulsifying agent is preferable from the standpoint of further enhancing the emulsifiability and water dispersion stability.

For example, the emulsifying agent may be one similar to the emulsifying agent that may be used in the preparation of the urethane resin forcibly dispersed in water. One emulsifying agent may be used alone, or two or more emulsifying agents may be used in combination. Among these, using a nonionic emulsifying agent and/or an anionic emulsifying agent is preferable from the standpoint of achieving higher emulsifiability and water dispersion stability.

From the standpoint of increasing the solids content, preferred combinations of the urethane resin (X) and an emulsifying agent are as follows.
(1) A combination of a urethane resin having a nonionic group with an anionic emulsifying agent
(2) A combination of a urethane resin having a nonionic group with a nonionic emulsifying agent
(3) A urethane resin having a nonionic group and no emulsifying agent
(4) A combination of a urethane resin having an anionic group with an anionic emulsifying agent
(5) A combination of a urethane resin having an anionic group with a nonionic emulsifying agent
(6) A urethane resin having an anionic group and no emulsifying agent

Among these, the types (1), (2), and (3) are more preferable from the standpoint of achieving higher durability, water resistance, chemical resistance, and hydrolysis resistance.

In instances where an emulsifying agent is used, a usage amount thereof may be within a range of 0.01 to 10 parts by mass per 100 parts by mass of the urethane resin (X). This is preferable from the standpoint of achieving higher emulsifiability and water dispersion stability. More preferably, the usage amount may be within a range of 0.05 to 5 parts by mass relative to the 100 parts.

Now, a method of the present invention for producing an aqueous dispersion of a urethane resin will be described.

According to the present invention, a method for producing an aqueous dispersion of a urethane resin includes the steps of preparing a urethane prepolymer (i) having an isocyanate group, by reacting together a polyol (a2), a polyisocyanate (a3), and a compound (a4) having a hydrophilic group, in the absence of a solvent (hereinafter abbreviated as a "prepolymer step"); subsequently dispersing the urethane prepolymer (i) in water (hereinafter abbreviated as an "emulsification step"); and subsequently reacting a chain extender (a1) with the urethane prepolymer (i) to yield a urethane resin (X) (hereinafter abbreviated as a "chain extension step").

It is important that the prepolymer step be carried out in the absence of a solvent. In the related art, the prepolymer step was typically carried out in the presence of an organic solvent, such as methyl ethyl ketone or acetone; this required a solvent removal step for removing the organic solvent after an emulsification step, and, accordingly, several days were needed for production at actual production sites. Furthermore, completely removing the organic solvent in the solvent removal step was difficult, and, in many cases, a small portion of the organic solvent remained; therefore, it was difficult to completely respond to the environmental concerns. In contrast, in the production method according to the present invention, since the prepolymer step is carried out in the absence of a solvent, an aqueous dispersion of a urethane resin completely free of organic solvents can be obtained, and in addition, labor saving for the production steps can be achieved.

Furthermore, in instances where the prepolymer step was carried out by using a method of the related art that uses an organic solvent, there were instances in which a urethane resin could not be emulsified in the first place, or the resulting urethane resin had a large particle diameter even when emulsification was achieved; accordingly, production of a favorable aqueous dispersion of a urethane resin was achieved only for very limited classes. Specific reasons for this have not been clarified, but one reason is believed to be as follows: during the emulsification, the organic solvent, a neutralizing agent (for adjusting the acid number of a urethane resin having an anionic group), and the like impair the ability of the hydrophilic groups present in the urethane resin.

In contrast, in the present invention, since the prepolymer step is carried out in the absence of a solvent, it is possible to consistently obtain aqueous dispersions of a urethane resin in which the incorporation of hydrophilic groups is reduced, a chain extender has been reacted, and an average particle diameter is comparable to those achieved by methods of the related art; such aqueous dispersions are of a class that has been difficult to realize with any of the methods of the related art.

In the prepolymer step, a molar ratio [isocyanate groups/(hydroxy groups and amino groups)], which is a molar ratio between the isocyanate groups present in the polyisocyanate (a3) and the total of the hydroxy groups present in the polyol (a2) and the hydroxy groups and amino groups present in the compound (a4) having a hydrophilic group, may be within a range of 1.1 to 3. This is preferable from the standpoint of achieving higher film forming ability and mechanical strength. More preferably, the molar ratio may be within a range of 1.2 to 2.

In the prepolymer step, the reaction may be carried out, for example, at a temperature of 50 to 120°C for 1 to 10 hours.

The prepolymer step may be carried out by using an apparatus, examples of which include reaction vessels equipped with a stirring impeller; kneading machines, such as kneaders, continuous kneaders, tapered rolls, single screw extruders, twin screw extruders, triple screw extruders, universal mixers, plastomills, and votator kneaders; rotary dispersion mixers, such as TK homomixers, Filmixes, Ebara Milders, Clearmixes, Ultraturraxes, Cavitrons, and biomixers; ultrasonic dispersers; apparatuses that do not include a movable part and which use the flow of a fluid itself to accomplish mixing, such as inline mixers.

It is preferable that the emulsification step be carried out at a temperature at which water does not evaporate, for example, at a temperature within a range of 10 to 90°C. The emulsification step may be carried out by using an apparatus similar to that for the prepolymer step. In particular, using a kneading machine is preferable, and using a twin screw extruder is more preferable. This is because, in these cases, it is possible to consistently obtain aqueous dispersions of a urethane resin in which the incorporation of hydrophilic groups is reduced, a chain extender has been reacted, and an average particle diameter is comparable to those achieved by methods of the related art, and to conveniently obtain aqueous dispersions of a urethane resin having a high urethane resin content.

The chain extension step is a step in which a reaction is caused between the chain extender (a1) and the isocyanate groups present in the urethane prepolymer (i) to convert the urethane prepolymer (i) to a high-molecular-weight polymer, thus yielding the urethane resin (X). The chain extension step may be carried out at a temperature of less than or equal to 50°C. This is preferable from the standpoint of productivity.

In the chain extension step, a molar ratio [(hydroxy groups and amino groups)/isocyanate groups], which is a molar ratio between the total of the hydroxy groups and amino groups present in the chain extender (a1) and the isocyanate groups present in the urethane prepolymer (i), may be within a range of 0.8 to 1.1. This is preferable from the standpoint of achieving higher film forming ability and mechanical strength. More preferably, the molar ratio may be within a range of 0.9 to 1.

The chain extension step may be carried out by using an apparatus similar to that for the prepolymer step.

Now, a layered body of the present invention will be described.

The layered body includes a substrate and a dried film of the aqueous dispersion of a urethane resin.

Examples of the substrate include substrates made of a fiber, such as a polyester fiber, a polyethylene fiber, a nylon fiber, an acrylic fiber, a polyurethane fiber, an acetate fiber, a rayon fiber, a polylactic acid fiber, cotton, hemp, silk, wool, a glass fiber, a carbon fiber, a nonwoven fabric of a co-spun fiber or the like of two or more of the foregoing fibers, a woven fabric thereof, and a knitted fabric thereof; products obtained by impregnating the nonwoven fabric with a resin such as a polyurethane resin; products obtained by additionally providing a porous layer on the nonwoven fabric; substrates made of a resin; rubber; glass; wood; and metal.

Methods for producing the layered body include, for example, a method in which the aqueous dispersion of a urethane resin is coated onto the substrate, and then the water is evaporated.

Methods for coating the aqueous dispersion of a urethane resin onto the substrate include, for example, methods using a roll coater, a knife coater, a comma coater, an applicator, or the like.

Methods for evaporating the water include, for example, a method in which drying is performed at a temperature of 60 to 130°C for 30 seconds to 10 minutes.

The dried film of the aqueous dispersion of a urethane resin, which can be prepared by any of the methods described above, has a thickness of 5 to 1000 µm, for example.

### EXAMPLES

The present invention will now be described in more detail with reference to examples.

### [Example 1]

A urethane prepolymer A1 was prepared as follows: 1,000 parts by mass of a polyether polyol (PTMG2000, manufactured by Mitsubishi Chemical Corporation, a number average molecular weight of 2,000, hereinafter abbreviated as "PTMG2000"), 24 parts by mass of 2,2-dimethylolpropionic acid (hereinafter abbreviated as "DMPA"), and 262 parts by mass of dicyclohexylmethane diisocyanate (hereinafter abbreviated as "HMDI") were reacted together at 100°C in the presence of 0.1 parts by mass of stannous octoate until the NCO percentage reached 2.1 mass%.

A1, which was heated to 70°C, triethylamine, an emulsifying agent, and water were simultaneously fed to a twin screw extruder (TEM-18SS, manufactured by Toshiba Machine Co., Ltd.) and mixed together to give an emulsified liquid. The emulsifying agent was a 20 mass% aqueous solution of sodium dodecylbenzene sulfonate (Neogen S-20F, manufactured by DKS Co. Ltd.). Flow rates of the feed liquids were as follows: A1, 10 kg/hour; triethylamine, 0.2 kg/hour; the aqueous solution of the emulsifying agent, 2.5 kg/hour; and water, 5.1 kg/hour. Operating conditions for the twin screw extruder were 50°C and 260 rpm.

Subsequently, an aqueous dilution of isophoronediamine (hereinafter abbreviated as "IPDA") having an amino group content corresponding to 95% of the amount of the NCO groups was immediately added to cause chain extension. Eventually, a polyurethane emulsion having a urethane resin content of 50 mass% was obtained.

### [Example 2]

A urethane prepolymer A2 was prepared as follows: 1,000 parts by mass of PTMG2000, 24 parts by mass of DMPA, and 262 parts by mass of HMDI were reacted together at 100°C in the presence of 0.1 parts by mass of stannous octoate until the NCO percentage reached 2.1 mass%.

A2, which was heated to 70°C, triethylamine, an emulsifying agent, and water were simultaneously fed to a twin screw extruder (TEM-18SS, manufactured by Toshiba Machine Co., Ltd.) and mixed together to give an emulsified liquid. The emulsifying agent was a polypropylene-polyethylene copolymer (Pluronic L-64, manufactured by Adeka Corporation). Flow rates of the feed liquids were as follows: A2, 10 kg/hour; triethylamine, 0.2 kg/hour; L-64, 0.5 kg/hour; and water, 7.1 kg/hour. Operating conditions for the twin screw extruder were 50°C and 260 rpm.

Subsequently, an aqueous dilution of IPDA having an amino group content corresponding to 95% of the amount of the NCO groups was immediately added to cause chain extension. Eventually, a polyurethane emulsion having a urethane resin content of 50 mass% was obtained.

### [Example 3]

A urethane prepolymer A3 was prepared as follows: 1,000 parts by mass of PTMG2000, 24 parts by mass of DMPA, and 262 parts by mass of HMDI were reacted together at 100°C in the presence of 0.1 parts by mass of stannous octoate until the NCO percentage reached 2.1 mass%.

A3, which was heated to 70°C, triethylamine, and water were simultaneously fed to a twin screw extruder (TEM-18SS, manufactured by Toshiba Machine Co., Ltd.) and mixed together to give an emulsified liquid. Flow rates of the feed liquids were as follows: A3, 10 kg/hour; triethylamine, 0.2 kg/hour; and water, 6.6 kg/hour. Operating conditions for the twin screw extruder were 50°C and 260 rpm.

Subsequently, an aqueous dilution of IPDA having an amino group content corresponding to 95% of the amount of the NCO groups was immediately added to cause chain extension. Eventually, a polyurethane emulsion having a urethane resin content of 50 mass% was obtained.

### [Example 4]

A urethane prepolymer A4 was prepared as follows: 1,000 parts by mass of PTMG2000, 18 parts by mass of polyethylene glycol (PEG600, manufactured by NOF Corporation, a number average molecular weight of 600, hereinafter abbreviated as "PEG"), and 262 parts by mass of HMDI were reacted together at 100°C in the presence of 0.1 parts by mass of stannous octoate until the NCO percentage reached 3.1 mass%.

A4, which was heated to 70°C, an emulsifying agent, and water were simultaneously fed to a twin screw extruder (TEM-18SS, manufactured by Toshiba Machine Co., Ltd.) and mixed together to give an emulsified liquid. The emulsifying agent was a 20 mass% aqueous solution of sodium dodecylbenzene sulfonate (Neogen S-20F, manufactured by DKS Co. Ltd.). Flow rates of the feed liquids were as follows: A4, 10 kg/hour; the aqueous solution of the emulsifying agent, 2.5 kg/hour; and water, 0.1 kg/hour. Operating conditions for the twin screw extruder were 50°C and 260 rpm.

Subsequently, an aqueous dilution of IPDA having an amino group content corresponding to 95% of the amount of the NCO groups was immediately added to cause chain extension. Eventually, a polyurethane emulsion having a urethane resin content of 60 mass% was obtained.

### [Example 5]

A urethane prepolymer A5 was prepared as follows: 1,000 parts by mass of PTMG2000, 18 parts by mass of PEG, and 262 parts by mass of HMDI were reacted together at 100°C in the presence of 0.1 parts by mass of stannous octoate until the NCO percentage reached 3.1 mass%.

A5, which was heated to 70°C, an emulsifying agent, and water were simultaneously fed to a twin screw extruder (TEM-18SS, manufactured by Toshiba Machine Co., Ltd.) and mixed together to give an emulsified liquid. The emulsifying agent was a polypropylene-polyethylene copolymer (Pluronic L-64, manufactured by Adeka Corporation). Flow rates of the feed liquids were as follows: A5, 10 kg/hour; the emulsifying agent, 0.5 kg/hour; and water, 5.8 kg/hour. Operating conditions for the twin screw extruder were 50°C and 260 rpm.

Subsequently, an aqueous dilution of IPDA having an amino group content corresponding to 95% of the amount of the NCO groups was immediately added to cause chain extension. Eventually, a polyurethane emulsion having a urethane resin content of 60 mass% was obtained.

### [Example 6]

A urethane prepolymer A6 was prepared as follows: 1,000 parts by mass of PTMG2000, 18 parts by mass of polyethylene glycol dimethyl ether (M550, manufactured by NOF Corporation, a number average molecular weight of 550, hereinafter abbreviated as "MPEG"), and 262 parts by mass of HMDI were reacted together at 100°C in the presence of 0.1 parts by mass of stannous octoate until the NCO percentage reached 3.3 mass%.

A6, which was heated to 70°C, and water were simultaneously fed to a twin screw extruder (TEM-18SS, manufactured by Toshiba Machine Co., Ltd.) and mixed together to give an emulsified liquid. Flow rates of the feed liquids were as follows: A6, 10 kg/hour; and water, 4.9 kg/hour. Operating conditions for the twin screw extruder were 50°C and 260 rpm.

Subsequently, an aqueous dilution of IPDA having an amino group content corresponding to 95% of the amount of the NCO groups was immediately added to cause chain extension. Eventually, a polyurethane emulsion having a urethane resin content of 50 mass% was obtained.

### [Example 7]

A urethane prepolymer A7 was prepared as follows: 1,000 parts by mass of PTMG2000, 18 parts by mass of PEG, and 262 parts by mass of HMDI were reacted together at 100°C in the presence of 0.1 parts by mass of stannous octoate until the NCO percentage reached 3.1 mass%.

A7, which was heated to 70°C, emulsifying agents, and water were simultaneously fed to a twin screw extruder (TEM-18SS, manufactured by Toshiba Machine Co., Ltd.) and mixed together to give an emulsified liquid. The emulsifying agents were a 20 mass% aqueous solution of sodium dodecylbenzene sulfonate (Neogen S-20F, manufactured by DKS Co. Ltd.) and a polypropylene-polyethylene copolymer (Pluronic L-64, manufactured by Adeka Corporation). Flow rates of the feed liquids were as follows: A7, 10 kg/hour; the aqueous solution of the emulsifying agent S-20F, 1.3 kg/hour; the emulsifying agent L-64, 0.3 kg/hour; and water, 1.1 kg/hour. Operating conditions for the twin screw extruder were 50°C and 260 rpm.

Subsequently, an aqueous dilution of ethylenediamine (hereinafter abbreviated as "EA" having an amino group content corresponding to 95% of the amount of the NCO groups was immediately added to cause chain extension. Eventually, a polyurethane emulsion having a urethane resin content of 60 mass% was obtained.

### [Comparative Example 1]

A urethane prepolymer A'1 was prepared as follows: 1,000 parts by mass of PTMG2000, 34 parts by mass of DMPA, and 262 parts by mass of HMDI were reacted together at 100°C in the presence of 0.1 parts by mass of stannous octoate until the NCO percentage reached 2.1 mass%.

A'1, which was heated to 70°C, triethylamine, an emulsifying agent, and water were simultaneously fed to a twin screw extruder (TEM-18SS, manufactured by Toshiba Machine Co., Ltd.) and mixed together to give an emulsified liquid. The emulsifying agent was a 20 mass% aqueous solution of sodium dodecylbenzene sulfonate (Neogen S-20F, manufactured by DKS Co. Ltd.).

By using the same feed liquids and the same twin screw extruder operating conditions as those for Example 1, an attempt was made to produce a polyurethane emulsion having a solids concentration of 50%; accordingly, an aqueous dilution of IPDA having an amino group content corresponding to 95% of the amount of the NCO groups was immediately added to the obtained emulsified liquid to cause chain extension. However, gelation occurred, and, therefore, the emulsion could not be obtained.

Accordingly, the amount of water was increased to reduce the solids content to produce a polyurethane emulsion. Flow rates of the feed liquids were as follows: A'1, 10 kg/hour; triethylamine, 0.2 kg/hour; the aqueous solution of the emulsifying agent, 2.5 kg/hour; and water, 19.6 kg/hour. Operating conditions for the twin screw extruder were 50°C and 260 rpm.

Subsequently, an aqueous dilution of IPDA having an amino group content corresponding to 95% of the amount of the NCO groups was immediately added to cause chain extension. Eventually, a polyurethane emulsion having a urethane resin content of 30 mass% was obtained.

### [Comparative Example 2]

A urethane prepolymer A'2 was prepared as follows: 1,000 parts by mass of PTMG2000, 34 parts by mass of DMPA, and 262 parts by mass of HMDI were reacted together at 100°C in the presence of 0.1 parts by mass of stannous octoate until the NCO percentage reached 2.1 mass%.

A'2, which was heated to 70°C, triethylamine, an emulsifying agent, and water were simultaneously fed to a twin screw extruder (TEM-18SS, manufactured by Toshiba Machine Co., Ltd.) and mixed together to give an emulsified liquid. The emulsifying agent was a polypropylene-polyethylene copolymer (Pluronic L-64, manufactured by Adeka Corporation).

By using the same feed liquids and the same twin screw extruder operating conditions as those for Example 2, an attempt was made to produce a polyurethane emulsion having a urethane resin content of 50 mass%; accordingly, an aqueous dilution of IPDA having an amino group content corresponding to 95% of the amount of the NCO groups was immediately added to the obtained emulsified liquid to cause chain extension. However, gelation occurred, and, therefore, the emulsion could not be obtained.

Accordingly, the amount of water was increased to reduce the solids content to produce a polyurethane emulsion. Flow rates of the feed liquids were as follows: A'2, 10 kg/hour; triethylamine, 0.2 kg/hour; the aqueous solution of the emulsifying agent, 0.5 kg/hour; and water, 21.6 kg/hour. Operating conditions for the twin screw extruder were 50°C and 260 rpm.

Subsequently, an aqueous dilution of IPDA having an amino group content corresponding to 95% of the amount of the NCO groups was immediately added to cause chain extension. Eventually, a polyurethane emulsion having a urethane resin content of 30 mass% was obtained.

### [Comparative Example 3]

A urethane prepolymer A'3 was prepared as follows: 1,000 parts by mass of PTMG2000, 34 parts by mass of DMPA, and 262 parts by mass of HMDI were reacted together at 100°C in the presence of 0.1 parts by mass of stannous octoate until the NCO percentage reached 2.1 mass%.

A'3, which was heated to 70°C, triethylamine, and water were simultaneously fed to a twin screw extruder (TEM-18SS, manufactured by Toshiba Machine Co., Ltd.) and mixed together to give an emulsified liquid.

By using the same feed liquids and the same twin screw extruder operating conditions as those for Example 3, an attempt was made to produce a polyurethane emulsion having a urethane resin content of 50 mass%; accordingly, an aqueous dilution of IPDA having an amino group content corresponding to 95% of the amount of the NCO groups was immediately added to the obtained emulsified liquid to cause chain extension. However, gelation occurred, and, therefore, the emulsion could not be obtained.

Accordingly, the amount of water was increased to reduce the solids content to produce a polyurethane emulsion. Flow rates of the feed liquids were as follows: A'3, 10 kg/hour; triethylamine, 0.2 kg/hour; the aqueous solution of the emulsifying agent, 0.5 kg/hour; and water, 20.4 kg/hour. Operating conditions for the twin screw extruder were 50°C and 260 rpm.

Subsequently, an aqueous dilution of IPDA having an amino group content corresponding to 95% of the amount of the NCO groups was immediately added to cause chain extension. Eventually, a polyurethane emulsion having a urethane resin content of 30 mass% was obtained.

### [Comparative Example 4]

A urethane prepolymer A'4 was prepared as follows: 1,000 parts by mass of PTMG2000, 75 parts by mass of PEG, and 262 parts by mass of HMDI were reacted together at 100°C in the presence of 0.1 parts by mass of stannous octoate until the NCO percentage reached 2.9 mass%.

A'4, which was heated to 70°C, an emulsifying agent, and water were simultaneously fed to a twin screw extruder (TEM-18SS, manufactured by Toshiba Machine Co., Ltd.) and mixed together to give an emulsified liquid. The emulsifying agent was a 20 mass% aqueous solution of sodium dodecylbenzene sulfonate (Neogen S-20F, manufactured by DKS Co. Ltd.).

By using the same feed liquids and the same twin screw extruder operating conditions as those for Example 4, an attempt was made to produce a polyurethane emulsion having a urethane resin content of 60 mass%; accordingly, an aqueous dilution of IPDA having an amino group content corresponding to 95% of the amount of the NCO groups was immediately added to the obtained emulsified liquid to cause chain extension. However, gelation occurred, and, therefore, the emulsion could not be obtained.

Accordingly, the amount of water was increased to reduce the solids content to produce a polyurethane emulsion. Flow rates of the feed liquids were as follows: A'4, 10 kg/hour; the aqueous solution of the emulsifying agent, 2.5 kg/hour; and water, 9.3 kg/hour. Operating conditions for the twin screw extruder were 50°C and 260 rpm.

Subsequently, an aqueous dilution of IPDA having an amino group content corresponding to 95% of the amount of the NCO groups was immediately added to cause chain extension. Eventually, a polyurethane emulsion having a urethane resin content of 40 mass% was obtained.

### [Comparative Example 5]

A urethane prepolymer A'5 was prepared as follows: 1,000 parts by mass of PTMG2000, 75 parts by mass of PEG, and 262 parts by mass of HMDI were reacted together at 100°C in the presence of 0.1 parts by mass of stannous octoate until the NCO percentage reached 2.9 mass%.

A'5, which was heated to 70°C, an emulsifying agent, and water were simultaneously fed to a twin screw extruder (TEM-18SS, manufactured by Toshiba Machine Co., Ltd.) and mixed together to give an emulsified liquid. The emulsifying agent was a 20 mass% aqueous solution of sodium dodecylbenzene sulfonate (Neogen S-20F, manufactured by DKS Co. Ltd.).

By using the same feed liquids and the same twin screw extruder operating conditions as those for Example 5, an attempt was made to produce a polyurethane emulsion having a urethane resin content of 50 mass%; accordingly, an aqueous dilution of IPDA having an amino group content corresponding to 95% of the amount of the NCO groups was immediately added to the obtained emulsified liquid to cause chain extension. However, gelation occurred, and, therefore, the emulsion could not be obtained.

Accordingly, the amount of water was increased to reduce the solids content to produce a polyurethane emulsion. Flow rates of the feed liquids were as follows: A'5, 10 kg/hour; the aqueous solution of the emulsifying agent, 0.5 kg/hour; and water, 11.3 kg/hour. Operating conditions for the twin screw extruder were 50°C and 260 rpm.

Subsequently, an aqueous dilution of IPDA having an amino group content corresponding to 95% of the amount of the NCO groups was immediately added to cause chain extension. Eventually, a polyurethane emulsion having a urethane resin content of 40 mass% was obtained.

### [Comparative Example 6]

A urethane prepolymer A'6 was prepared as follows: 1,000 parts by mass of PTMG2000, 69 parts by mass of MPEG, and 262 parts by mass of HMDI were reacted together at 100°C in the presence of 0.1 parts by mass of stannous octoate until the NCO percentage reached 3.2 mass%.

A'6, which was heated to 70°C, and water were simultaneously fed to a twin screw extruder (TEM-18SS, manufactured by Toshiba Machine Co., Ltd.) and mixed together to give an emulsified liquid.

By using the same feed liquids and the same twin screw extruder operating conditions as those for Example 6 an attempt was made to produce a polyurethane emulsion having a urethane resin content of 50 mass%; accordingly, an aqueous dilution of IPDA having an amino group content corresponding to 95% of the amount of the NCO groups was immediately added to the obtained emulsified liquid to cause chain extension. However, gelation occurred, and, therefore, the emulsion could not be obtained.

Accordingly, the amount of water was increased to reduce the solids content to produce a polyurethane emulsion. Flow rates of the feed liquids were as follows: A'6, 10 kg/hour; and water, 10.3 kg/hour. Operating conditions for the twin screw extruder were 50°C and 260 rpm.

Subsequently, an aqueous dilution of IPDA having an amino group content corresponding to 95% of the amount of the NCO groups was immediately added to cause chain extension. Eventually, a polyurethane emulsion having a urethane resin content of 40 mass% was obtained.

### [Comparative Example 7]

A urethane prepolymer A'7 was prepared as follows: 1,000 parts by mass of PTMG2000, 18 parts by mass of PEG, 262 parts by mass of HMDI, and methyl ethyl ketone were reacted together at 70°C in the presence of 0.1 parts by mass of stannous octoate until the NCO percentage reached 1.6 mass%.

A'7, which was heated to 70°C, an emulsifying agent, and water were simultaneously fed to a twin screw extruder (TEM-18SS, manufactured by Toshiba Machine Co., Ltd.) and mixed together. The emulsifying agent was a 20 mass% aqueous solution of sodium dodecylbenzene sulfonate (Neogen S-20F, manufactured by DKS Co. Ltd.). However, emulsification could not be achieved, and, therefore, the following evaluations could not be made.

### [Method for Measuring Number Average Molecular Weight and the Like]

The number average molecular weights of the polyol and the like used in the Examples and Comparative Examples are values obtained from a measurement that used gel permeation column chromatography (GPC), which was performed under the following conditions.

### Measuring Instrument: high-performance GPC instrument (HLC-8220GPC, manufactured by Tosoh Corporation)

Columns: the following columns, manufactured by Tosoh Corporation, were connected in series and used.
   TSKgel G5000 (7.8 mm I.D.×30 cm) × 1
   TSKgel G4000 (7.8 mm I.D.×30 cm) × 1
   TSKgel G3000 (7.8 mm I.D.×30 cm) × 1
   TSKgel G2000 (7.8 mm I.D.×30 cm) × 1
Detector: RI (differential refractometer)
Column temperature: 40°C
Eluent: tetrahydrofuran (THF)
Flow rate: 1.0 mL/min
Injection volume: 100 µL (a tetrahydrofuran solution with a sample concentration of 0.4 mass%)
Standard: a standard curve was generated by using the following standard polystyrenes.

### (Standard Polystyrene)

TSKgel standard polystyrene A-500, manufactured by Tosoh Corporation
TSKgel standard polystyrene A-1000, manufactured by Tosoh Corporation
TSKgel standard polystyrene A-2500, manufactured by Tosoh Corporation
TSKgel standard polystyrene A-5000, manufactured by Tosoh Corporation
TSKgel standard polystyrene F-1, manufactured by Tosoh Corporation
TSKgel standard polystyrene F-2, manufactured by Tosoh Corporation
TSKgel standard polystyrene F-4, manufactured by Tosoh Corporation
TSKgel standard polystyrene F-10, manufactured by Tosoh Corporation
TSKgel standard polystyrene F-20, manufactured by Tosoh Corporation
TSKgel standard polystyrene F-40, manufactured by Tosoh Corporation
TSKgel standard polystyrene F-80, manufactured by Tosoh Corporation
TSKgel standard polystyrene F-128, manufactured by Tosoh Corporation
TSKgel standard polystyrene F-288, manufactured by Tosoh Corporation
TSKgel standard polystyrene F-550, manufactured by Tosoh Corporation

### [Method for Measuring Average Particle Diameter of Urethane Resin (X)]

An average particle diameter of each of the aqueous dispersions of a urethane resin obtained in the Examples and Comparative Examples was measured by using a laser diffraction/scattering particle size distribution analyzer (LA-910, manufactured by Horiba, Ltd.); the dispersion medium used was water, the relative refractive index was 1.10, and the particle diameters were area-based particle diameters.

### [Method for Evaluating Film forming ability]

Aqueous resin compositions were prepared as follows: 100 parts by mass of each of the aqueous dispersions of a urethane resin obtained in the Examples and Comparative Examples and 2 parts by mass of a thickening agent (Borchi Gel ALA, manufactured by Borchers) were added to a vessel and stirred with a mechanical mixer at 2,000 rpm for 2 minutes, and subsequently, the resultant was degassed by using a vacuum degasser. Each of the aqueous resin compositions was coated to a thickness of 150 µm onto a sheet of release paper (EK-100D, manufactured by Lintec Corporation) by using a knife coater, and the resultant was dried in a hot air dryer (120°C, 60 seconds). Evaluations were made as follows.
T: The resulting film was dry, with water having been evaporated, and the film was free of cracks.
F: Water remained in the resulting film, and/or a crack was observed in the film.

**[Table 1]**

| Table 1 | | Example 1 | Example 2 | Example 3 | Example 4 |
|---|---|---|---|---|---|
| Chain extender (a1) | Type | IPDA | IPDA | IPDA | IPDA |
| | Molecular weight | 170.3 | 170.3 | 170.3 | 170.3 |
| Compound (a4) having hydrophilic group | Type | DMPA | DMPA | DMPA | PEG |
| | Usage ratio (mass%) | 1.8 | 1.8 | 1.8 | 1.5 |
| Organic solvent in prepolymer step | | none | none | none | none |
| Urethane resin (X) content (mass%) | | 50 | 50 | 50 | 50 |
| Average particle diameter (µm) of urethane resin (X) | | 0.23 | 0.28 | 0.81 | 0.19 |
| Emulsifying agent | Type | anionic emulsifying agent | nonionic emulsifying agent | none | anionic emulsifying agent |
| Evaluation of film forming ability | | T | T | T | T |

**[Table 2]**

| Table 2 | | Example 5 | Example 6 | Example 7 | Comparative example 1 |
|---|---|---|---|---|---|
| Chain extender (a1) | Type | IPDA | IPDA | EA | IPDA |
| | Molecular weight | 170.3 | 170.3 | 60.1 | 170.3 |
| Compound (a4) having hydrophilic group | Type | PEG | MPEG | PEG | DMPA |
| | Usage ratio (mass%) | 1.5 | 1.4 | 1.5 | 2.6 |
| Organic solvent in prepolymer step | | none | none | none | none |
| Urethane resin (X) content (mass%) | | 60 | 50 | 60 | 30 |
| Average particle diameter (µm) of urethane resin (X) | | 0.18 | 0.51 | 0.18 | 0.02 |
| Emulsifying agent | Type | nonionic emulsifying agent | none | anionic emulsifying agent, nonionic emulsifying agent | anionic emulsifying agent |
| Evaluation of film forming ability | | T | T | T | F |

**[Table 3]**

| Table 3 | | Comparative example 2 | Comparative example 3 | Comparative example 4 |
|---|---|---|---|---|
| Chain extender (a1) | Type | IPDA | IPDA | IPDA |
| | Molecular weight | 170.3 | 170.3 | 170.3 |
| Compound (a4) having hydrophilic group | Type | DMPA | DMPA | PEG |
| | Usage ratio (mass%) | 2.6 | 2.6 | 5.6 |
| Organic solvent in prepolymer step | | none | none | none |
| Urethane resin (X) content (mass%) | | 30 | 30 | 40 |
| Average particle diameter (µm) of urethane resin (X) | | 0.02 | 0.03 | 0.12 |
| Emulsifying agent | Type | nonionic emulsifying agent | none | anionic emulsifying agent |
| Evaluation of film forming ability | | F | F | F |

**[Table 4]**

| Table 4 | | Comparative example 5 | Comparative example 6 | Comparative example 7 |
|---|---|---|---|---|
| Chain extender (a1) | Type | IPDA | IPDA | IPDA |
| | Molecular weight | 170.3 | 170.3 | 170.3 |
| Compound (a4) having hydrophilic group | Type | PEG | MPEG | PEG |
| | Usage ratio (mass%) | 5.6 | 5.2 | 1.5 |
| Organic solvent in prepolymer step | | none | none | MEK |
| Urethane resin (X) content (mass%) | | 40 | 40 | - |
| Average particle diameter (µm) of urethane resin (X) | | 0.13 | 0.3 | - |
| Emulsifying agent | Type | nonionic emulsifying agent | none | nonionic emulsifying agent |
| Evaluation of film forming ability | | F | F | Emulsification was not achieved |

As demonstrated by Examples 1 to 7, aqueous dispersions of a urethane resin of the present invention are aqueous dispersions of a urethane resin that can be consistently produced and have excellent film forming ability.

In contrast, in Comparative Examples 1 to 6, which are embodiments having a urethane resin (X) content below the range specified by the present invention, the film forming ability was inferior. Furthermore, in Comparative Example 7, the composition of the raw materials for the prepolymer was the same as that of Example 5; however, as a result of the use of methyl ethyl ketone in the prepolymer step, emulsification could not be achieved.

## Claims

1. An aqueous dispersion of a urethane resin, the aqueous dispersion comprising a urethane resin (X), with an essential raw material of the urethane resin (X) being a chain extender (a1), wherein
a content of the urethane resin (X) in the aqueous dispersion is within a range of 50 to 70 mass%.

2. The aqueous dispersion of a urethane resin according to Claim 1, wherein the aqueous dispersion of a urethane resin is free of an organic solvent.

3. The aqueous dispersion of a urethane resin according to Claim 1 or 2, wherein the chain extender (a1) has an amino group.

4. The aqueous dispersion of a urethane resin according to any one of Claims 1 to 3, wherein the urethane resin (X) has an anionic group and/or a nonionic group.

5. The aqueous dispersion of a urethane resin according to any one of Claims 1 to 4, wherein the urethane resin (X) has an average particle diameter within a range of 0.01 to 1 µm.

6. The aqueous dispersion of a urethane resin according to any one of Claims 1 to 5, wherein a raw material of the urethane resin (X) is a compound (a4) having a hydrophilic group, and a usage ratio of the compound (a4) is less than or equal to 5 mass% of a total mass of raw materials that form the urethane resin (X).

7. A film formed from the aqueous dispersion of a urethane resin according to any one of Claims 1 to 6.

8. A layered body comprising a substrate and the film according to Claim 7.

9. A method for producing an aqueous dispersion of a urethane resin, the method comprising the steps of:
preparing a urethane prepolymer (i) having an isocyanate group, by reacting together a polyol (a2), a polyisocyanate (a3), and a compound (a4) having a hydrophilic group, in the absence of a solvent;
subsequently dispersing the urethane prepolymer (i) in water; and
subsequently reacting a chain extender (a1) with the urethane prepolymer (i) to yield a urethane resin (X), wherein
a content of the urethane resin (X) is 50 to 70 mass%.

10. The method for producing an aqueous dispersion of a urethane resin according to Claim 9, wherein the reacting of the chain extender (a1) is carried out at a temperature of less than or equal to 50°C.
